(19) Europäisches Patentamt
European Patent Office
Office européen des brevets

(11) EP 4 712 010 A1

(12) EUROPEAN PATENT APPLICATION
published in accordance with Art. 153(4) EPC

(43) Date of publication:
18.03.2026 Bulletin 2026/12

(51) International Patent Classification (IPC):
G06Q 50/04 (2012.01)

(21) Application number: 23936656.0

(52) Cooperative Patent Classification (CPC):
G06Q 30/06; G06Q 30/0601; G06Q 50/04

(22) Date of filing: 20.07.2023

(86) International application number:
PCT/JP2023/026657

(87) International publication number:
WO 2024/232108 (14.11.2024 Gazette 2024/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.05.2023 JP 2023077198
03.07.2023 JP 2023109452

(71) Applicant: Toyota Jidosha Kabushiki Kaisha
Toyota-shi, Aichi-ken 471-8571 (JP)

(72) Inventors:
• FUJIWARA, Teruyoshi
Toyota-shi, Aichi-ken 471-8571 (JP)
• NITTA, Iwao
Toyota-shi, Aichi-ken 471-8571 (JP)
• SUZUKI, Ryota
Nagoya-shi, Aichi-ken 451-6015 (JP)

(74) Representative: Cabinet Beau de Loménie
103, rue de Grenelle / CS 90800
75340 Paris Cedex 07 (FR)

(54) SERVER DEVICE, INFORMATION PROCESSING METHOD, AND PROGRAM

(57) A server apparatus that stores, in linkage, for each of a plurality of companies included in a supply chain, product information concerning products of the respective companies. The server apparatus receives, from an account of a downstream company of a target company, first contact to an account of the target company, the first contact concerning a linking work for product information of a target product, executes processing concerning the linking work in response to receiving the first contact, and notifies, in correlation with first identification information included in the first contact, a status of the linking work for the target product toward an account of a second downstream company located further downstream than the downstream company. The processing concerning the linking work includes transmitting second contact concerning linking work for product information of an upstream product linked to the product information of the target product to an account of an upstream company of the target company. The notifying the status includes notifying second identification information in correlation with the first identification information.

Fig. 15

**Description**

[Technical Field]

The present disclosure relates to a supply chain.

[Background Art]

There has been known a system that performs information sharing in a plurality of companies constituting a supply chain. Concerning this system, for example, Patent document 1 discloses a system that performs information sharing among companies included in a supply chain.

[Citation List]

[Patent document]

[Patent document 1] Japanese Patent Laid-Open No. 2004-171146

[Summary of the Invention]

[Problems to be solved by the invention]

An object of the present disclosure is to make it easy to grasp a linking status of products included in a supply chain.

[Means for solving the Problems]

An aspect of an embodiment of the present disclosure is
a server apparatus including: a memory configured to store, in linkage, for each of a plurality of companies included in a supply chain, product information concerning products of the respective companies; and a controller, the controller executing: receiving, from an account of a downstream company of a target company, first contact concerning a linking work for product information of a target product, the first contact including first identification information, and transmitting the first contact to an account of the target company; executing processing concerning the linking work in response to receiving the first contact; and receiving a status of the linking work for the target product from the account of the target company and notifying, in correlation with the first identification information included in the received first contact, the status toward an account of a second downstream company located further downstream than the downstream company, the processing concerning the linking work including receiving, from the account of the target company, second contact concerning linking work for product information of an upstream product linked with the product information of the target product, the second contact including second identification information, and transmitting the second contact to an account of an upstream company of the target company, the notifying the status including notifying the second identification information to the account of the second downstream company in correlation with the first identification information.
An aspect of an embodiment of the present disclosure is
an information processing method executed by a server apparatus including: a memory configured to store, in linkage, for each of a plurality of companies included in a supply chain, product information concerning products of the respective companies; and a controller, the information processing method including: a step of receiving, from an account of a downstream company of a target company, first contact concerning a linking work for product information of a target product, the first contact including first identification information, and transmitting the first contact to an account of the target company; a step of executing processing concerning the linking work in response to receiving the first contact; and a step of receiving a status of the linking work for the target product from the account of the target company and notifying, in correlation with the first identification information included in the received first contact, the status toward an account of a second downstream company located further downstream than the downstream company, the processing concerning the linking work including a step of receiving, from the account of the target company, second contact concerning linking work for product information of an upstream product linked with the product information of the target product, the second contact including second identification information, and transmitting the second contact to an account of an upstream company of the target company, the notifying the status including a step of notifying the second identification information in correlation with the first identification information.
As another aspect, there is a program for causing a computer to execute the method described above or a computer-readable storage medium storing the program in a non-transitory manner.

[Effects of the invention]

According to the present disclosure, it is possible to make it easy to grasp a linking status of products included in a supply chain.

[Brief Description of the Drawings]

Fig. 1 is a diagram for explaining a supply chain according to an embodiment.
Fig. 2 is a diagram for explaining a relation among products supplied by the supply chain.
Fig. 3 is a diagram illustrating an overview of processing performed between a company terminal and a server apparatus.
Fig. 4 is a diagram illustrating an overview of processing performed between a company terminal and a server apparatus in a first embodiment.
Fig. 5 is a hardware configuration diagram of the server apparatus according to the embodiment.
Fig. 6 is a hardware configuration diagram of the company terminal according to the embodiment.
Fig. 7 is a software configuration diagram of the server apparatus according to the embodiment.
Fig. 8 is an example of product information generated by the company terminal.
Fig. 9 is a diagram for explaining linking of pieces of product information.
Fig. 10 is a diagram for explaining a product tree and an amount of carbon dioxide emitted in processes.
Fig. 11 is an example of a screen to which the product tree is output by an image.
Fig. 12 is an example of a product tree in the case in which a product without access authority is not disclosed.
Fig. 13 is a flowchart of processing performed by the server apparatus in the first embodiment.
Fig. 14 is a flowchart of processing performed by the server apparatus in the first embodiment.
Fig. 15 is a diagram illustrating an overview of processing performed between a company terminal and a server apparatus in a second embodiment.
Fig. 16 is a flowchart of processing performed by the server apparatus in the second embodiment.

[Mode for Carrying Out the Invention]

In recent years, there has been a desire to track an amount of greenhouse effect gas emitted when a product such as an automobile or a battery is manufactured, that is, track carbon footprint.

Here, a case in which the product is supplied by a supply chain including a plurality of companies is conceived. In an example, at least some companies (intermediate suppliers) included in the supply chain can receive components from one or more upstream companies, produce (including manufacture) an own product using the received components, and deliver the produced own product to a company in the next process (a downstream company). A most upstream company can directly produce an own product and deliver the produced own product to a company in the next process. Some of the companies of the supply chain can directly deliver products received from other companies to different companies (that is, can be involved in distribution). The plurality of companies repeat this and a final product is obtained in a final process.

In a scene in which a product concerning an automobile is obtained, a supply chain may be configured from an OEM manufacturer and a plurality of suppliers. The OEM manufacturer may be a company that assembles a final product (a most downstream company). The suppliers may be companies that supply components, materials, assemblies, and the like for producing the product. Companies included in the supply chain can be determined according to a product.

Note that, in the following description, a component or the like produced by each of the plurality of suppliers is referred to as "product" and the final product is referred to as "final product". In an example, the final product can be supplied to consumers. The suppliers and the OEM manufacturer included in the supply chain are simply referred to as "companies". Each of a plurality of classes included in the supply chain is referred to as "Tier".

In the following description, a specific class in the supply chain is represented by a word Tier N. N represents a class in the supply chain. A smaller numerical value means that the class is located further downstream.

In such a system, for example, in order to calculate a total amount of greenhouse effect gas emitted according to manufacturing of the final product, it is requested to clarify a product supply relation among the plurality of companies. This is because, if a relation among a plurality of products constituting the final product is not clear, it is difficult to correctly calculate a total amount of greenhouse effect gas emitted in a plurality of processes.

In order to clarify the product supply relation among the plurality of companies, there is a method of collecting information indicating a product supply relation from companies included in a supply chain. By collecting such information from all the companies, it is possible to generate a tree indicating a supply relation among the plurality of products constituting the final product (hereinafter, product tree). It is also possible to perform tracking of carbon footprint (for example, calculation of emission of greenhouse effect gas) using the generated product tree. The companies can acquire information generated using the product tree.

However, when causing the plurality of companies included in the supply chain to perform information provision, there is a problem in that it is difficult to determine to what extent the information for generating the product tree has been collected.

For example, it is assumed that a company belonging to a certain Tier (a Tier N) provides information indicating a relation between an own product and a product produced by a company belonging to a class (a Tier N+1) immediately above the Tier (the Tier N). The server apparatus decides a supply relation of the products between the Tier N and the Tier N+1 based on such information. Similarly, when the company belonging to the Tier N+1 provides a relation between the own product and a product produced by a company belonging to a Tier N+2, the server apparatus decides a supply relation of the products between the Tier N+1 and the Tier N+2. By repeating this up to a most upstream Tier, a final product tree can be decided.

However, the companies that has performed the information provision cannot learn to which class in the upstream direction processing for deciding a supply relation among products has been completed. Since the server apparatus cannot generate a product tree unless a supply relation is decided for all the products, the companies cannot learn at which timing information concerning the product tree can be obtained from the server apparatus.

A server apparatus according to the present disclosure solves such problems.

A server apparatus according to an aspect of the present disclosure is a server apparatus including a memory configured to store, in linkage, for each of a plurality of companies included in a supply chain, product information concerning products of the respective companies and a controller.

Specifically, the controller executes receiving, from an account of a downstream company of a target company, first contact concerning a linking work for product information of a target product, the first contact including first identification information, and transmitting the first contact to an account of the target company, executing processing concerning the linking work in response to receiving the first contact, and receiving a status of the linking work for the target product from the account of the target company and notifying, in correlation with the first identification information included in the received first contact, the status toward an account of a second downstream company located further downstream than the downstream company, the processing concerning the linking work includes receiving, from the account of the target company, second contact concerning linking work for product information of an upstream product linked with the product information of the target product, the second contact including second identification information, and transmitting the second contact to an account of an upstream company of the target company, and the notifying the status includes notifying the second identification information to the account of the second downstream company in correlation with the first identification information.

The target company is a company that produces the target product. The target company is located further upstream than the downstream company in the supply chain.

The product information is information concerning products produced by the companies included in the supply chain. The product information may include information for performing an arithmetic operation concerning traceability (traceability-related information). The traceability-related information may include, for example, an amount of greenhouse effect gas emitted when the target product is produced and an energy consumption amount.

The linking work is work for correlating pieces of product information having a supply relation. The controller performs, for example, processing for linking product information of a first product located downstream of the supply chain and product information of a second product located upstream of the supply chain (which may be a product used for manufacturing of the first product or a product included in the first product).

Note that, in the following description, a product located relatively further downstream than a certain product in a supply chain is referred to as downstream product and a product located relatively further upstream than a certain product in the supply chain is referred to as upstream product. A company that manufactures the downstream product is referred to as downstream company and a company that manufactures the upstream product is referred to as upstream company. A company located further downstream than the downstream company is referred to as second downstream company.

The first contact is contact transmitted from the downstream company to the target company in order to cause the server apparatus to perform the linking work for the target product of the target company. The first contact can be, for example, a request for performing linking between the downstream product manufactured by the downstream company and the target product. The first contact includes first identification information for identifying the first contact.

The server apparatus transmits the first contact received from the downstream company to the account of the target company and performs processing concerning the linking work for the target product based on a result of interacting with the account.

The processing concerning the linking work includes transmitting the second contact to the upstream company besides the linking work itself (for example, the processing for correlating the target product and the downstream product). The second contact may be contact for requesting linking processing for the upstream product located further upstream than the target product (for example, processing for correlating the target product and the upstream product).

As described above, the target company that has received the first contact performs linking of the downstream product and the target product using the server apparatus and transmits the second contact to the upstream company. The second contact includes the second identification information for identifying the second contact.

By repeatedly executing this processing targeting a plurality of Tiers, it is possible to perform linking for all products located upstream (that is, decide a supply relation among the products).

The target company that has received the first contact may perform, with the server apparatus, processing concerning linking work and notify a status of the linking work to the account of the second downstream company. The second downstream company is a company located further downstream than the downstream company in the supply chain.

As described above, the processing concerning the linking work includes performing linking on the target product and transmitting the second contact to the account of the upstream company located further upstream than the target company. Therefore, the status notified to the second downstream company can include a status of the linking performed on the target product and a status concerning the second contact transmitted to the upstream company.

Examples of the status concerning the second contact include "to which company (or a company belonging to which Tier) the second contact has been issued" and "liking of which product (or a product belonging to which Tier) has been completed in response to the second contact". The status concerning the second contact may include information for identifying the second contact.

Further, the server apparatus may store the first identification information for identifying the first contact and the second identification information for identifying the second contact relating to the first contact. The target company may perform notification of the status based on correlation between the first identification information and the second identification information. With such a configuration, it is possible to track to where contact has been propagated in the upstream direction and to where linking of pieces of product information has been completed according to the propagation.

Note that, when the target product is located most upstream of the supply chain (also referred to as termination of the product tree), that is, when the target product is present most upstream of the product tree, since an upstream company is absent when viewed from the target company, the second contact cannot be transmitted. In this case, as the processing concerning the linking work, a termination flag may be set for the product information of the target product. The termination flag is a flag for identifying that the target product is located at the termination (most upstream) of the product tree.

The controller may be configured to, in response to receiving the first contact, after the linking work for the product information of the target product has been completed, transmit the second contact to the account of the upstream company.

That is, linking of pieces of product information in the upstream direction may be requested after a relation among pieces of product information in the downstream direction is decided. With such a configuration, it is possible to sequentially create, from the downstream direction toward the upstream direction, a state in which a product tree is decided.

Specific embodiments of the present disclosure are described below with reference to the drawings. Hardware configurations, module configurations, functional configurations, and the like described in the embodiments are not meant to limit a disclosed technical range only thereto unless particularly described otherwise.

(First Embodiment)

An information processing system according to the present embodiment is a system that provides information concerning a product supplied by a supply chain including a plurality of companies. The information concerning the product is typically information concerning traceability. The companies belonging to the supply chain may be determined as appropriate according to an attribute of the product or the like.

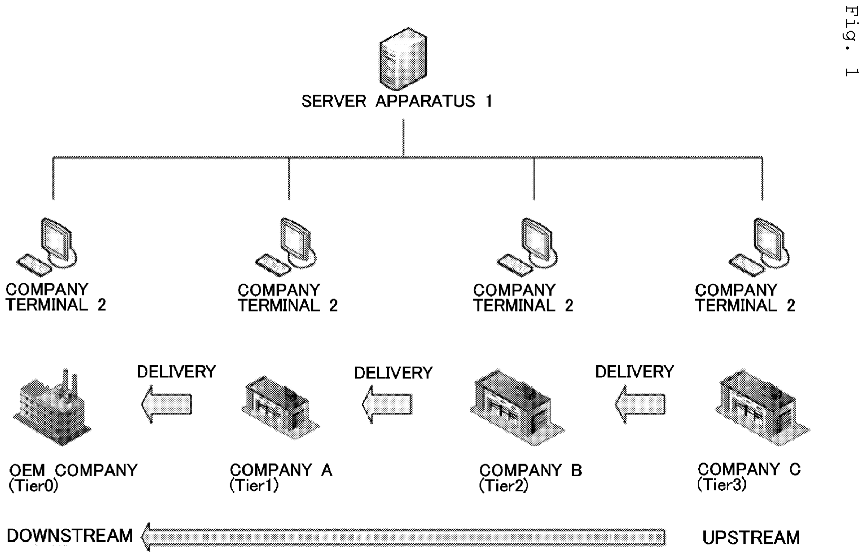

First, the structure of the supply chain is described. Fig. 1 is a diagram for explaining an example of the supply chain according to the present embodiment. The supply chain illustrated in Fig. 1 is configured by an OEM company and a plurality of companies that are suppliers. In the example illustrated in Fig. 1, a supply chain that manufactures an automobile itself or a product relating to the automobile, such as a battery, is assumed. The OEM company assembles a final product. The plurality of companies (companies A to C), which are the suppliers, supply components, materials, assemblies, and the like for manufacturing the final product. Each of the plurality of companies, which are the suppliers, produces one or more products and delivers the products to a company located in a class immediately below the company. The plurality of companies repeat this and the final product is obtained in a final process (that is, the OEM company).

In the present embodiment, in classes of the supply chain, a side that delivers a product is referred to as upstream side and a side that procures the product and produces a new product is referred to as downstream side. In the present specification, a company located on the upstream side is referred to as upstream company and a company located on the downstream side is referred to as downstream company. A product produced by the upstream company is referred to as upstream product and a product produced by the downstream company is referred to as downstream product. The upstream product is included in the downstream product.

In the present embodiment, a class included in a supply chain is referred to as Tier. A Tier 0 is a lowermost class that assembles a final product (corresponding to the OEM company). Tiers 1, 2, and 3 transition to the upstream side. Depending on a class of attention, a downstream company changes to an upstream company. For example, the company B located in the Tier 2 is a downstream company in a relation with the Tier 3 but is an upstream company in a relation with the Tier 1. In this way, the definitions of "upstream" and "downstream" can change for each of classes.

Note that other companies may be present in the middle between the upstream company and the downstream company or other products may be present in the middle between the upstream product and the downstream product.

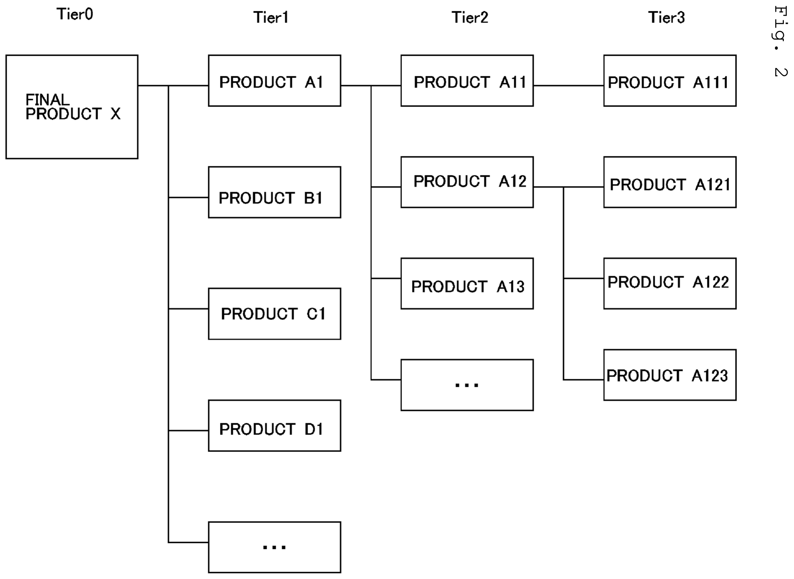

Fig. 2 is a diagram for explaining a relation among products supplied by the supply chain. Here, a supply relation among a plurality of products constituting a final product X is represented by a tree diagram. In the present example, the final product X is produced by assembling products A1, B1, C1, D1, and the like. The product A1 is produced by assembling products A11, A12, A13, and the like. In this way, a relation among a plurality of products constituting a final product can be represented by a tree diagram in which the individual products are nodes.

In the following description, a tree diagram concerning a specific final product is referred to as product tree.

A server apparatus 1 according to the present embodiment collects, from terminals (company terminals 2) corresponding to companies, information concerning products produced by the companies (hereinafter, product information) and information for linking a relation among the pieces of product information and generates such a product tree based on these pieces of information. The product information includes information concerning traceability (for example, information concerning an amount of greenhouse effect gas emitted at the time of production of the products. Hereinafter, traceability-related information). Processing concerning traceability can be performed using the information.

As illustrated in Fig. 1, the information processing system according the present embodiment includes the server apparatus 1 and a plurality of company terminals 2.

The company terminal 2 is a terminal corresponding to each of a plurality of companies constituting a supply chain. The number of terminals corresponding to the companies may be any number. A terminal corresponding to a target company may include a terminal of a company (for example, an outsourcing company) that performs operation concerning the target company.

The server apparatus 1 collects, from the respective plurality of company terminals 2, information for generating a product tree and generates the product tree based on the collected information. Further, the server apparatus 1 can execute processing concerning traceability (typically, for example, processing for calculating total emission of carbon dioxide) based on the generated product tree. The server apparatus 1 can transmit an execution result of the processing to the company terminal 2.

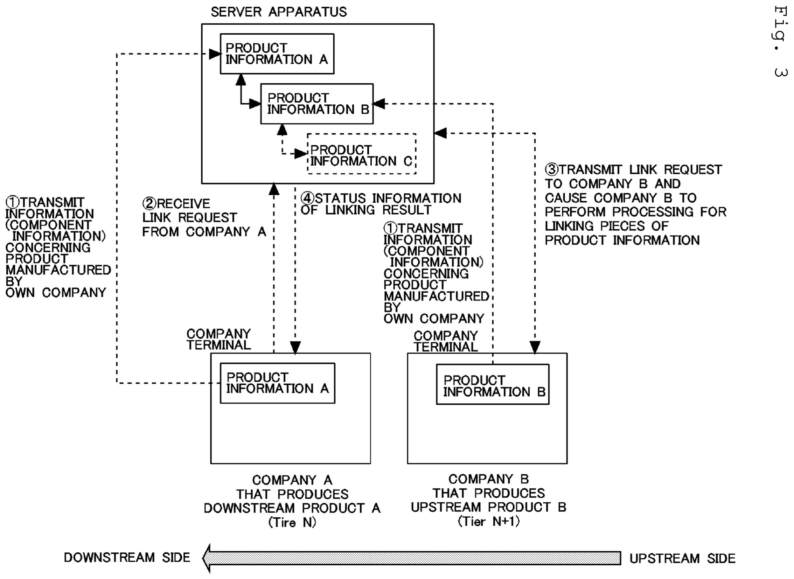

Subsequently, an overview of processing for the server apparatus 1 generating a product tree is described with reference to Fig. 3. Fig. 3 is a diagram illustrating an overview of processing performed between the company terminal 2 and the server apparatus 1. In an example illustrated in Fig. 3, it is assumed that, in any class, the company A, which is a downstream company, and the company B, which is an upstream company, are present. It is assumed that the company B produces a product B and delivers the product B to the company A and the company A produces a product A using the product B. That is, in the example illustrated in Fig. 3, the product B is a child node of the product A on the product tree.

The company terminals 2 corresponding to the companies transmit information concerning products produced by the own companies (product information) to the server apparatus 1. In the present example, the company terminal 2 corresponding to the company A transmits product information concerning the product A (referred to as product information A) to the server apparatus 1. Similarly, the company terminal 2 corresponding to the company B transmits product information concerning the product B (referred to as product information B) to the server apparatus 1. The product information of the companies is stored in the server apparatus 1.

In order to generate a product tree and perform processing concerning traceability (for example, processing for calculating $CO_2$ emission) based on the generated product tree, the server apparatus 1 needs to link the pieces of product information stored in the server apparatus 1. Linking indicates correlating a supply relation among products. In the illustrated example, the product A is produced using the product B. That is, since there is a supply relation between the product A and the product B, the product information A and the product information B are targets of the linking.

By repeating this processing for all of the products, the server apparatus 1 can generate a product tree. The server apparatus 1 can perform, for example, arithmetic processing concerning traceability.

Operation for linking pieces of product information stored in the server apparatus 1 is performed by the company terminal 2. In an example, a person in charge of the downstream company (the company A) logs in to the server apparatus 1 from the company terminal 2 using an account of the downstream company and transmits, to the server apparatus 1, a request for linking the downstream product, which is the own product, (a link request) to the server apparatus 1. The server apparatus 1 transmits the link request to the upstream company (the company B) and causes the upstream company to perform processing for performing linking of the pieces of product information.

For example, the link request may be a request including an ID for identifying the link request (hereinafter, request ID) and an identifier of the downstream product that is a linking target. The server apparatus 1 that has received the link request may transmit a request to the upstream company and cause the upstream company to reply with a product linked with a product relating to the link request. The server apparatus 1 can link pieces of product information (that is, the product information A and the product information B) based on these pieces of information.

Note that, here, an example in which the upstream company that has received the link request replies with a product to be a link destination, whereby the server apparatus 1 performs linking of the pieces of product information is cited. However, another method may be adopted if the server apparatus 1 can specify pieces of product information linked with one another. For example, the upstream company may reply with an own product, access to which is permitted to the downstream company, and the downstream company may select a product to be a link destination out of upstream products, access to which is permitted.

The server apparatus 1 notifies a linking result (status information) of the pieces of product information to the downstream company (the company A).

Linking of pieces of product information can be performed in a specific class of the supply chain by the processing illustrated in Fig. 3.

However, even if the linking is completed in the specific class, the product tree cannot be completed. For example, in the example illustrated in Fig. 2, a product belonging to the Tier 1 and a product belonging to the Tier 2 can be linked by a company belonging to the Tier 1 (for example, a company that manufactures the product A1) transmitting a link request to the server apparatus 1. However, since the supply chain is present up to the Tier 3, unless linking is completed between the product belonging to the Tier 2 and a product belonging to the Tier 3, the product tree cannot be completed.

Thus, the server apparatus 1 according to the first embodiment repeatedly executes, among a plurality of Tiers, the processing described with reference to Fig. 3.

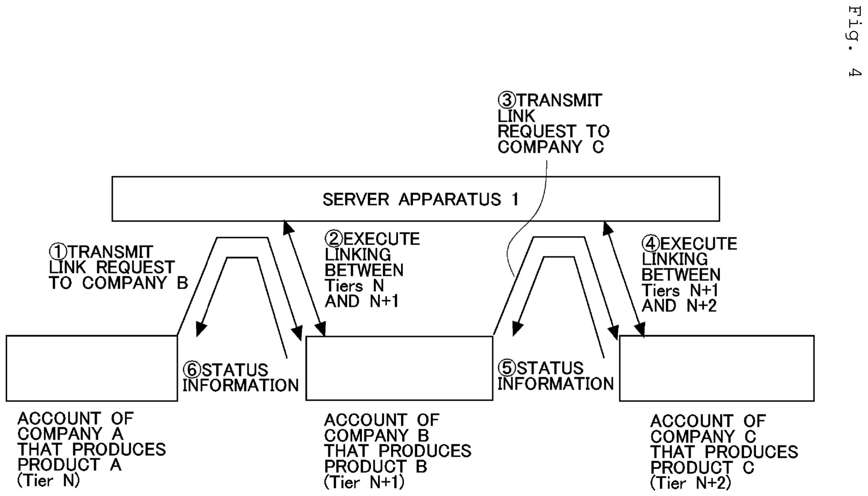

Fig. 4 is a diagram for explaining the processing. Here, three classes of the Tier N, the Tier N+1, and the Tier N+2 are exemplified.

First, an account of the company A belonging to the Tier N transmits a link request to the server apparatus 1. The server apparatus 1 transmits the link request to an account of the company B belonging to the Tier N+1. The link request is an example of "first contact". The link request includes an ID for identifying the link request (a request ID).

The account of the upstream company (the company B belonging to the Tier N+1) performs interaction with the server apparatus 1 and executes linking of pieces of product information (product information of the product A belonging to the Tier N and product information of the product B belonging to the Tier N+1).

Subsequently, the account of the company B issues a link request to an upstream company from the viewpoint of the company B. The link request is an example of "second contact". For example, the company B issues a link request to the company C belonging to the Tier N+2 at a stage when the linking of the product A and the product B is completed. Similarly, an account of the company C performs interaction with the server apparatus 1 and executes linking of pieces of product information (the product information of the product B belonging to the Tier N+1 and product information of the product C belonging to the Tier N+2).

In the present example, since the product C is the end of the product tree, the company C cannot issue a link request to further upstream. Thus, the company C sets a flag clearly indicating the termination in the product information of the product C.

A company that has received a link request transmits status information for notifying a status of linking processing to a downstream company when linking for a product of the own company is completed. For example, the company C transmits status information for notifying to the effect that "the linking of the product B and the product C (located at the end of the product tree) has been completed in response to the received link request having the request ID" to the company B via the server apparatus 1.

Status information is transmitted from the company B to the company A in the same manner.

However, since the company B is located in the middle of the supply chain, at timing when linking of the own product is performed, the company B cannot notify the company A that the linking has been completed to the end of the product tree.

Thus, in such a case, the company B may suspend the notification to the company A until status information is transmitted from upstream (the company C). In this case, the company B may transmit status information to the company A with reception of the status information from the company C, which is the upstream company, as a trigger.

With such a configuration, all the companies can recognize that "linking has been completed to the end of the product tree".

Note that the status information may be transmitted a plurality of times. For example, the company B may transmit the status information in order to notify a current status to the company A respectively at timing when the linking of the own product is completed and timing when the status information is received from the company C.

The status information may include an ID of a link request relating to the status information (a request ID). For example, the status information transmitted from the company B to the company A may include a request ID of a link request issued from the company A to the company B. Accordingly, the company A can recognize to which link request the received status information corresponds.

The status information transmitted from the company B to the company A may include a request ID of a link request issued further in the upstream direction than the company B (for example, a request ID of a link request issued from the company B to the company C). Accordingly, the company A can recognize an issuance status of the link request further in the upstream direction than the company B and a status for the link request.

As described above, the status information issued from the company B to the company A may include three kinds of data: (1) an ID of the link request from the company A to the company B, (2) an ID of the link request from the company B to the company C, and (3) a status of the linking processing performed by the company B.

[Hardware configuration]

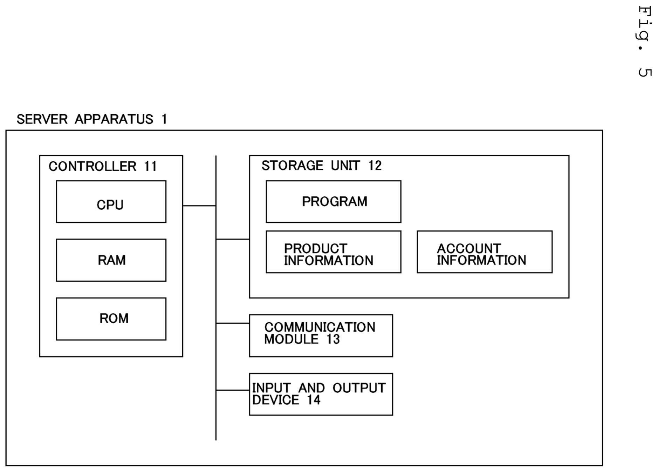

Subsequently, hardware configurations of the apparatuses constituting the system are described. Fig. 5 is a diagram schematically illustrating an example of a hardware configuration of the server apparatus 1 according to the present embodiment. The server apparatus 1 is configured as a computer including a controller 11, a storage unit 12, a communication module 13, and an input and output device 14.

The server apparatus 1 can be configured as a computer including a processor (a CPU, a GPU, or the like), a main memory (a RAM, a ROM, or the like), and an auxiliary storage device (an EPROM, a hard disk drive, a removable medium, or the like). In the auxiliary storage device, an operating system (OS), various programs, various tables, and the like are stored. Functions (software modules) matching predetermined purposes described below can be implemented by executing the programs stored in the auxiliary storage device. However, some or all of the functions may be implemented as hardware modules by a hardware circuit such as an ASIC or an FPGA.

The controller 11 is an arithmetic unit that implements various functions of the server apparatus 1 by executing predetermined programs. The controller 11 can be implemented by a hardware processor such as a CPU. The controller 11 may be configured to include a RAM, a ROM (Read Only Memory), and a cache memory.

The storage unit 12 is means for storing information and is configured by a storage medium such as a RAM, a magnetic disk, or a flash memory. In the storage unit 12, a program to be executed by the controller 11, data used by the program, and the like are stored.

A database is constructed in the storage unit 12. In the database, product information collected from the plurality of company terminals 2 and account information concerning the companies are stored. Details are described below.

The communication module 13 is a communication interface for connecting the server apparatus 1 to a network. The communication module 13 may be configured to include, for example, a network interface board and a wireless communication interface for wireless communication. The server apparatus 1 can perform data communication with other computers (for example, the company terminals 2) via the communication module 13.

The input and output device 14 is means for receiving input operation performed by an operator and presenting information to the operator. Specifically, the input and output device 14 includes devices for performing input such as a mouse and a keyboard and devices for performing output such as a display and a speaker. The input and output device may be integrally configured by, for example, a touch panel display.

Note that, in a specific hardware configuration of the server apparatus 1, omission, substitution, and addition of components are possible as appropriate according to an embodiment. For example, the controller 11 may include a plurality of hardware processors. The hardware processors may be configured by a microprocessor, an FPGA, a GPU, and the like. The input and output device 14 may be omitted or an input and output device (for example, an optical drive) other than the exemplified one may be added. The server apparatus 1 may be configured by a plurality of computers. In this case, hardware configurations of the computers may coincide or may not coincide.

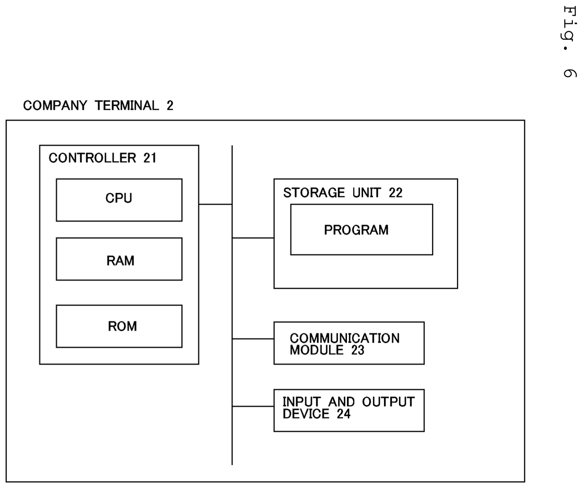

Fig. 6 is a diagram schematically illustrating an example of a hardware configuration of the company terminal 2 according to the present embodiment. The company terminal 2 is configured as a computer including a controller 21, a storage unit 22, a communication module 23, and an input and output device 24.

Like the server apparatus 1, the company terminal 2 can be configured as a computer including a processor (a CPU, a GPU, or the like), a main memory (a RAM, a ROM, or the like), and an auxiliary storage device (an EPROM, a hard disk drive, a removable medium, or the like). However, some or all of functions (software modules) may be implemented as hardware modules by a hardware circuit such as an ASIC or an FPGA.

The controller 21 is an arithmetic unit that implements various functions (software modules) of the company terminal 2 by executing predetermined programs. The controller 11 can be implemented by a hardware processor such as a CPU. The controller 21 may be configured to include a RAM, a ROM (Read Only Memory), and a cache memory.

The storage unit 22 is means for storing information and is configured by a storage medium such as a RAM, a magnetic disk, or a flash memory. In the storage unit 22, a program to be executed by the controller 21, data used by the program, and the like are stored.

The communication module 23 is a communication interface for connecting the company terminal 2 to a network. The communication module 23 may be configured to include, for example, a network interface board and a wireless communication interface for wireless communication. The company terminal 2 can perform data communication with other computers (for example, the server apparatus 1) via the communication module 23.

The input and output device 24 is means for receiving input operation performed by an operator and presenting information to the operator. Specifically, the input and output device 24 includes devices for performing input such as a mouse and a keyboard and devices for performing output such as a display and a speaker. The input and output device may be integrally configured by, for example, a touch panel display.

Note that, in a specific hardware configuration of the company terminal 2, as in the server apparatus 1, omission, substitution, and addition of components are possible as appropriate according to an embodiment.

[Software configuration]

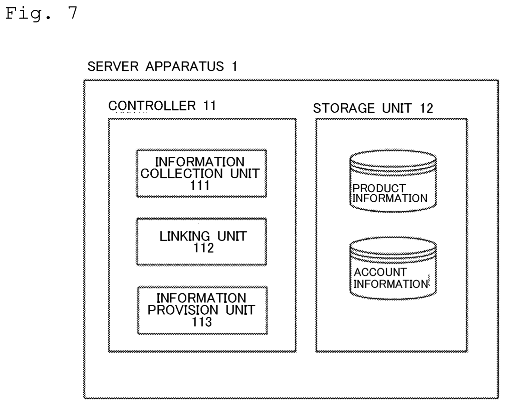

Subsequently, software configurations of the apparatuses constituting the system are described. Fig. 7 is a diagram schematically illustrating a software configuration of the server apparatus 1 according to the present embodiment. In the present embodiment, the controller 11 is configured to include three software modules of an information collection unit 111, a linking unit 112, and an information provision unit 113. The software modules may be implemented by programs stored in the storage unit 12 being executed by the controller 11 (a CPU). Note that information processing executed by the information collection unit 111, the linking unit 112, and the information provision unit 113 described below is synonymous with the information processing executed by the controller 11.

The information collection unit 111 is configured to execute processing for collecting product information from the company terminal 2 and storing the product information in the storage unit 12.

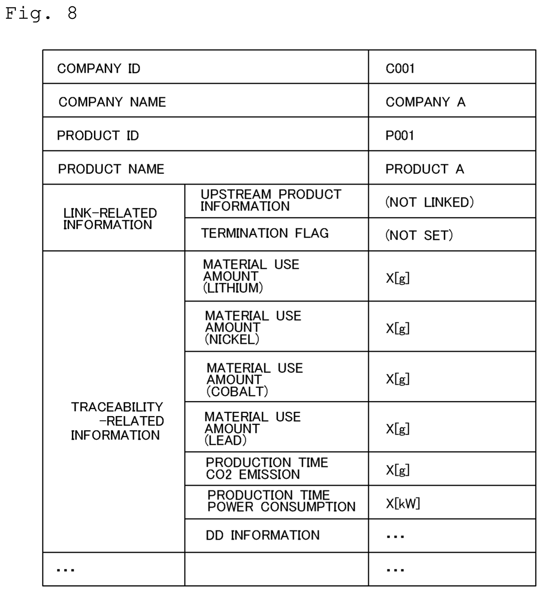

Fig. 8 is an example of the product information collected by the information collection unit 111. The product information may be input via the operator of the company terminal 2. In the present embodiment, the product information is configured to include fields of a company ID, a company name, a product ID, and a product name. The company ID and the company name are an identifier and a name of a company that produces a target product (that is, a company that uses the company terminal 2). The product ID and the product name are an identifier and a name of the target product.

Further, the product information is configured to include link-related information. The link-related information is information for identifying an upstream product linked with a target product. In the present embodiment, the link-related information includes fields of "upstream product information" and "termination flag".

The upstream product information field is configured to store information for identifying product information corresponding to the upstream product linked with the target product (that is, a product necessary for producing the target product and included in the target product). The upstream product information field is used when the server apparatus 1 performs linking of products. Basically, the target product is not linked with the upstream product at a stage when the product information is generated. Therefore, a value indicating the upstream product may not be stored in the upstream product information field.

The termination flag field is configured to store a flag indicating whether the target product is a leaf node, that is, a node located most upstream (at the end) in the product tree. In the present embodiment, since the plurality of company terminals 2 transmit product information, this flag is used in order to discriminate, for a product present in the product tree, whether a product is further linked on the upstream side or further linking does not occur (the target product is located most upstream). That is, the termination flag field is used when the server apparatus 1 decides linking of products. Basically, a link relation of the target product is undecided at a stage when the product information is generated. Therefore, "0 (not termination in the current state)" may be stored in the termination flag field. In order to finally generate the product tree, the product information of the companies stored in the server apparatus 1 is set to a state of "linking with an upstream product is performed" or ""1" is set in the termination flag".

Further, the product information is configured to include traceability-related information. In an example, the traceability-related information may include a use amount of a material (for example, an upstream product) per production amount of a product, information concerning a recycling rate of a predetermined material, emission of greenhouse effect gas emitted when the product is produced, due diligence-related information, or a combination of the foregoing. The predetermined material may be, for example, lithium, nickel, cobalt, lead, or graphite. The recycling rate may be directly expressed or may be indirectly expressed like, for example, a combination of a total use amount and a use amount of a recycle material.

These values are values corresponding to a process of producing the target product. For example, in the case of the example illustrated in Fig. 3, for example, an amount of greenhouse effect gas emitted in a production activity for the product A is stored in the traceability-related information included in the product information A. Information concerning a process until the upstream product is produced (for example, an amount of greenhouse effect gas emitted until the upstream product B is produced) is not included in the traceability-related information included in the product information A.

The information collection unit 111 provides, to the operator of the company terminal 2, an interface for causing the operator to input such information and acquires product information.

As described above, the linking unit 112 receives a link request from an account of a company belonging to a specific Tier and transmits a link request to an account of a company belonging to a Tier adjacent in the upstream direction.

The linking unit 112 performs linking of pieces of product information by performing interaction with an account of a company that is a transmission destination of the link request.

For example, the linking unit 112 is configured to acquire, from the company terminal 2, information for linking pieces of product information by performing interaction with the company terminal 2 of the company that is the transmission destination of the link request. Further, the linking unit 112 is configured to execute, based on the information, for the product information stored in the storage unit 12, processing for writing information representing a linking relation.

By repeating this processing in a plurality of Tiers, it is possible to perform linking for all products located further upstream than a product of a company that has transmitted a link request first.

The link request may include an ID (an example of "first identification information" or "second identification information") of the link request, a company ID of the company that has performed the request, and a product ID of a product relating to the request. The product ID is an identifier of an own product to be a target of linking. The link request can also be considered a request for linking the own product and an upstream product corresponding to the own product.

As described above, a company that has received the link request transmits status information to a downstream company when the linking for the own product is completed.

When receiving status information of an account of a specific company, the linking unit 112 transmits the status information to an account of a downstream company corresponding to the account of the specific company. The status information may be status information for notifying a status of linking processing between adjacent Tiers or may be status information for notifying a status of linking processing for a product located upstream (for example, up to a product belonging to which Tier the linking has been completed). The status information may include an ID of a link request relating to the status information. Accordingly, the linking unit 112 can recognize a company that is a transmission destination of the status information.

The information provision unit 113 is configured to execute information processing relating to a product tree and output a result of executing the information processing.

When the operator of the company terminal 2 requests the server apparatus 1 to provide a product tree (and information incidental to the product tree), the information provision unit 113 performs processing and provides information to the company terminal 2.

The information processing relating to the product tree may include processing for performing an arithmetic operation concerning traceability for the product tree. The outputting the result of executing the information processing may include processing for providing information concerning a generated product tree to the company terminal 2. In an example, the information provision unit 113 is configured to generate information concerning a product tree and output the generated information concerning the product tree.

The storage unit 12 stores product information transmitted from the company terminal 2 and account information. In the present embodiment, when operators of companies log in to the server apparatus 1 using corresponding accounts of the companies via the company terminals 2, interaction between the server apparatus 1 and the company terminals 2 is performed. The account information is information concerning accounts corresponding to the companies constituting a supply chain. However, an access method to the server apparatus 1 may not be limited to such an example and may be selected as appropriate according to an embodiment.

[Details of processing]

Subsequently, specific content of the processing performed by the server apparatus 1 and the company terminal 2 is described.

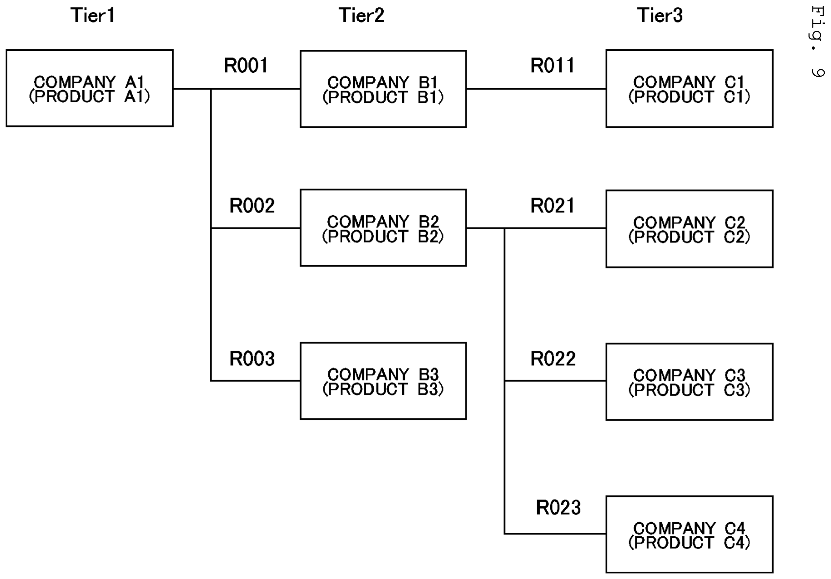

First, the linking processing performed by the linking unit 112 is described with reference to Fig. 9. Fig. 9 is a diagram illustrating an example of the structure of the supply chain.

First, the information collection unit 111 of the server apparatus 1 acquires product information from the company terminal 2. In the example illustrated in Fig. 9, eight companies are included in the supply chain. The respective eight companies transmit product information from the company terminals 2 to the server apparatus 1. The product information acquired by the server apparatus 1 is stored in the storage unit 12.

The linking unit 112 of the server apparatus 1 receives a link request from any one of the company terminals 2. The link request is transmitted from a company located downstream in the supply chain and is transmitted to an upstream company via the server apparatus 1. An operator of the upstream company performs processing (information provision or the like) for performing linking of a product of the company (a downstream product) and a product located upstream (an upstream product).

Here, it is assumed that an account of a company A1 belonging to the Tier 1 illustrated in Fig. 9 has transmitted a link request to the server apparatus 1. The link request includes an ID of the link request (a request ID), an ID of the company that has transmitted the link request, and a product ID of a target product.

In the example illustrated in Fig. 9, since a company B1 (a product B1), a company B2 (a product B2), a company B3 (a product B3) belong to the Tier 2, the product A1 is linked with three products. Thus, in the present example, three link requests are transmitted.

The linking unit 112 of the server apparatus 1 causes the storage unit 12 to store the received link request. That is, the server apparatus 1 stores the ID of the link request, the company that has transmitted the link request, and the product relating to the link request in correlation with one another.

The linking unit 112 of the server apparatus 1 transmits the received link request to an account of a target company. The target company is a company belonging to a Tier immediately above a downstream company and is a company that executes linking of pieces of product information in response to a link request from the downstream company. In the example illustrated in Fig. 9, link requests are transmitted to accounts of the companies B1, B2, and B3. The accounts of the companies that have received the link requests perform interaction with the linking unit 112 and execute linking of pieces of product information.

Here, it is assumed that a request ID R001 is given to the link request directed to the company B1, a request ID R002 is given to the link request directed to the company B2, and a request ID R003 is given to the link request directed to the company B3.

The company that has received the link request may transmit information for performing linking of the pieces of product information to the linking unit 112. The linking unit 112 may update the stored product information to perform the linking of the pieces of product information in response to the transmission of the information.

For example, the company terminal 2 of the target company may cause the operator to select a product linked with a product relating to the link request. For example, when the target company is the company B1, an operator of the company B1 can input, for example, for the product A1, via the input and output device 24, information indicating that an upstream product is the product B1.

The company terminal 2 may transmit data for identifying the upstream product (the product B1) and the downstream product (the product A1) to the linking unit 112.

As described with reference to Fig. 8, the field (the link-related information) concerning the product to be the link destination is provided in the product information. The linking unit 112 stores, based on the information transmitted from the target company, information corresponding to the product information B1 (that is, the upstream product) in the link-related information included in the product information A1. For example, an identifier of an upstream product, an identifier of a company that produces the upstream product, and the like are stored in the link-related information. Note that, for example, a pointer to product information to be a link destination may be stored in the link-related information.

According to the processing described above, a part of a tree structure in which the product information of the downstream product is a parent node and the product information of the upstream product is a child node is formed.

When a liked product is not located at the end of the product tree, an account of the target company that has executed the linking issues a link request anew to a company located upstream in order to advance the linking further in the upstream direction. In the case of the example illustrated in Fig. 9, an account of the company B1 issues a new link request. The link request is directed to a company belonging to the Tier 3. A request ID (in the present example, "R011") is given to the link request in the same manner.

Note that the issuance of the new link request in the upstream direction may be performed when the following conditions are satisfied.

(1) An own product (here, the product B1) is registered in the server apparatus 1.
(2) Linking with a downstream product (here, the product A1) has been completed for the own product (here, the product B1).

Here, when the link request issued anew is issued in response to a link request transmitted from another company, the linking unit 112 stores a relation between the link requests. For example, in the case of the present example, the link request having the ID R011 is issued in response to the link request having then ID R001.

The server apparatus 1 stores the ID "R001" (an example of "first identification information") of the link request transmitted from the company A1 and the ID "R011" (an example of "second identification information") of the link request transmitted from the company B1 in correlation with each other.

Similarly, in the example illustrated in Fig. 9, the server apparatus 1 stores a relation between R002 and R021, a relation between R002 and R022, and a relation between R002 and R023. Note that the IDs of the link requests may be stored by the company terminal 2.

As described above, the server apparatus 1 (or the company terminal 2) stores a relation among consecutively issued link requests. In this way, when processing concerning linking is executed in a certain Tier, the server apparatus 1 (or the company terminal 2) can specify a downstream company relating to the linking. For example, in the example illustrated in Fig. 9, when linking is completed in response to the link request identified by "R011", the server apparatus 1 (or the company terminal 2) can specify the link request identified by "R001". Accordingly, the server apparatus 1 (or the company terminal 2) is capable of notifying a status of linking processing performed in any Tier to any company located downstream. For example, the server apparatus 1 (or the company terminal 2) can notify information "linking has been completed up to the Tier 3 in response to the link request "R001"" to the company A1.

In the present embodiment, when linking is completed in a certain Tier, the account of the target company notifies a status of linking processing (transmits status information) to a downstream company based on the ID of the link request. The transmission of the status information can be performed via the linking unit 112.

The status information may be, for example, status information for notifying that linking of pieces of product information has been completed in the Tier. Note that, when there are a plurality of Tiers and the linking processing is sequentially performed for each of the Tiers, the status information may be transmitted every time the linking processing is performed or the status information may be transmitted after linking up to most upstream is completed.

The status information may include, for example, any one of the following items.

(A) Notification to the effect that linking of the downstream product and the own product has been completed and the link request has been issued to the upstream company

(B) Notification to the effect that linking of the downstream product and the own product has been completed and a termination flag has been set for product information of the own product (when the own product is present at the end of the product tree)

(C) Notification to the effect that linking of the downstream product and the own product has been completed and linking has been completed between the own company and the upstream company

(D) Notification to the effect that linking of all products located further upstream than the own company has been completed

The status information may include, besides these notifications, an ID of a link request from the downstream company to the target company and an ID of a link request from the target company to the upstream company. Note that the notification of these request IDs may serve as the notifications of (A) to (C) described above.

The status information may be notified to the account of the target company with a push notification or may be notified when the account of the target company logs in to the system.

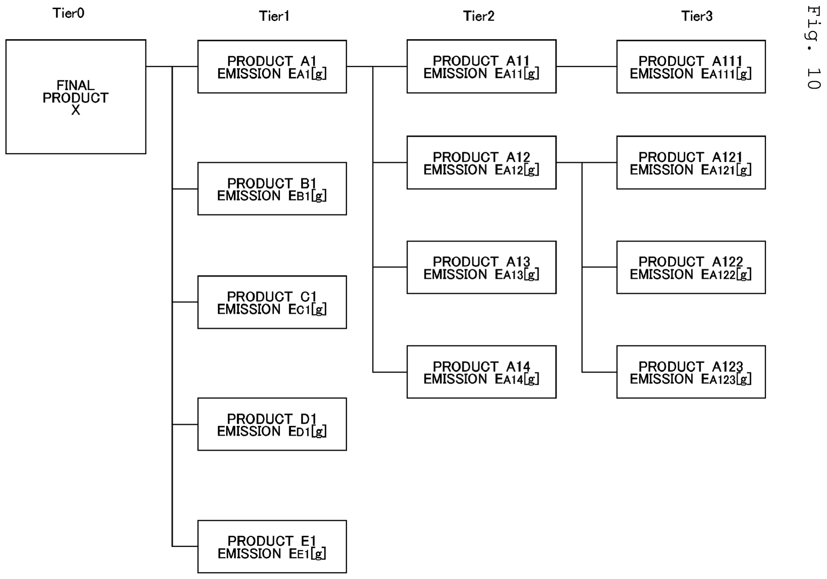

Subsequently, processing performed by the information provision unit 113 is described with reference to Fig. 10 to Fig. 11.

The information provision unit 113 of the server apparatus 1 generates information concerning a product tree based on stored product information and outputs the information concerning the product tree. The generating the information concerning the product tree indicates processing for generating various kinds of information concerning products (for example, information concerning traceability or an image representing a link relation among products with a tree diagram) after a link of nodes is formed by linking of the pieces of product information. The processing for generating the information concerning the product tree is an example of information processing concerning a product tree. In order to generate the information concerning the product tree, the linking of the pieces of product information needs to be entirely completed. When such a condition is satisfied, the information provision unit 113 can appropriately generate the information.

As described with reference to Fig. 2, the product tree in the present embodiment is the product tree representing the supply relation among the pieces of product information in the supply chain with the tree diagram. The information provision unit 113 can generate an image representing the tree diagram based on the product information.

Further, when generating the information concerning the product tree, the information provision unit 113 integrates traceability-related information defined in the pieces of product information and outputs a result of the integration.

Here, the integration of the traceability-related information is described with reference to Fig. 10. In the present example, the traceability-related information includes a value for performing tracking of carbon footprint (hereinafter, CFP value). Fig. 10 is a diagram for explaining a plurality of products constituting a final product X and amounts of carbon dioxide ($CO_2$) emitted in processes for producing the plurality of products. For example, it is assumed that $E_{A12}$ [g] of carbon dioxide is emitted in a process of producing a product A12 in the figure. It is assumed that the product is configured by three upstream products A121 to A123. An upstream product included in a certain product in this way is referred to as "included product" as well. Here, a total amount of carbon dioxide emitted until a certain target product is produced can be obtained by repeating processing for handing over $CO_2$ emission related with the upstream product to a downstream product while referring to product information between companies of two classes adjacent to each other from a most upstream product, which is a leaf node, to a target product.

In the example illustrated in Fig. 10, when the target product is A12, a total amount of carbon dioxide emitted until the product A12 is produced can be calculated by totaling $CO_2$ emission corresponding to included products (upstream products A121 to A123) with $CO_2$ emission corresponding to the product A12. That is, $CO_2$ emission integrated for the product A11 is as follows.

$$I_{A12} = E_{A12} + E_{A121} \times U_{A121} + E_{A122} \times U_{A122} + E_{A123} \times U_{A123} \ [g]$$

Here, it is assumed that $E_{A121}$, $E_{A122}$, and $E_{A123}$ are respectively $CO_2$ emissions per unit amount at the time when the products A121, A122, and A123 are produced. It is assumed that $U_{A121}$, $U_{A122}$, and $U_{A123}$ are respectively use amounts of the products A121, A122, and A123 used for production of the product A12. The use amounts are an example of a use amount of a material per production amount of a product included in the traceability-related information described above. $CO_2$ emission of a final product (a product of a most downstream company) can be obtained by sequentially executing the calculation described above from a product of a most upstream company to the final product.

The integrated CFP value may be stored in the storage unit 12 separately from the product information or may be included in a part of the product information. That is, the product information corresponding to the product A12 may retain both of $E_{A12}$ that is emission in a process alone and $I_{A12}$ that is emission after integration.

The CFP value after the integration is used again when integration is carried out for a downstream product. This processing is executed in classes with most upstream as a start point, whereby the CFP value (for example, a cumulative value of $CO_2$ emission) is sequentially handed over in the downstream direction. The CFP value is finally handed over to the final product, whereby a CFP value (for example, total emission of $CO_2$) corresponding to an entire period until the final product is produced can be obtained.

As described above, when generating the information concerning the product tree, the information provision unit 113 repeatedly executes the processing for sequentially integrating CFP values included in pieces of product information from most upstream to most downstream. Note that, in the example described above, the emission of carbon dioxide is exemplified as the target of integration. However, the traceability-related information, which is the target of integration, may be a recycling rate concerning a predetermined material, a score concerning due diligence, or the like. Note that, when the traceability-related information is a numerical value, the integration may be performed by numerical value calculation or, when the traceability-related information is information (for example, due diligence-related information) other than the numerical value, the integration may be mere information collection.

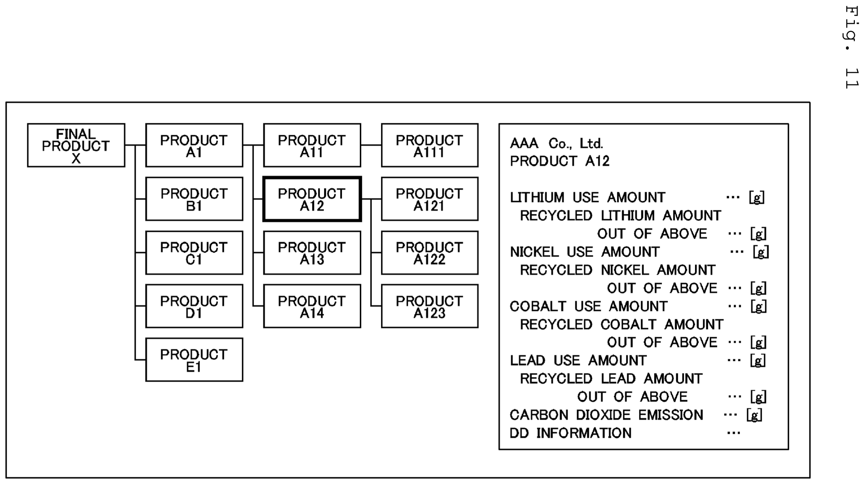

The information provision unit 113 may output the generated product tree in an image format. At the same time, the information provision unit 113 may output traceability-related information corresponding to any product. Fig. 11 is an example of a screen onto which a product tree is output by an image. The illustrated screen includes an image illustrating, with a tree diagram, a supply relation among a plurality of products constituting a final product. By selecting any product, it is possible to view traceability-related information corresponding to the product or an integration result of traceability-related information corresponding to an entire period until the product is produced (for example, a total value of emissions of carbon dioxide from most upstream). Such information can be output via the input and output device 14 included in the server apparatus 1 based on operation of the operator of the server apparatus 1.

Further, in response to a request from the company terminal 2, the information provision unit 113 may provide the generated product tree to the company terminal 2. Note that, in some case, it is inappropriate to disclose the entire product tree to a specific company. Thus, when providing the product tree to the company terminal 2 corresponding to a certain company, the information provision unit 113 may perform processing for not disclosing a range in which access authority from the company is absent.

For example, a company included in a supply chain sometimes desires to conceal product information of the own company from other companies. In order to enable this, access authority to the product information may be permitted between the companies. For example, a rule "access authority to the product information of the own company is permitted to only a company adjacent to the own company" may be set and the server apparatus 1 may disclose the product tree according to the rule.

An upstream company may set access authority to specific product information at timing when the upstream company replies to a link request transmitted from a downstream company. In this case, the server apparatus 1 may determine, based on information concerning the access authority transmitted from the upstream company, which information is disclosed to which company.

For example, in the example illustrated in Fig. 10, it is assumed that the information provision unit 113 receives a disclosure request for a product tree from the company terminal 2 corresponding to a company that produces the product A12. Here, it is assumed that access authority is imparted to the company only for the products A121, A122, and A123. That is, the company cannot access product information other than the three products and A1, which is the downstream product. In this case, the information provision unit 113 provides, to the company terminal 2, a product tree in which information concerning the products without access authority are not disclosed.

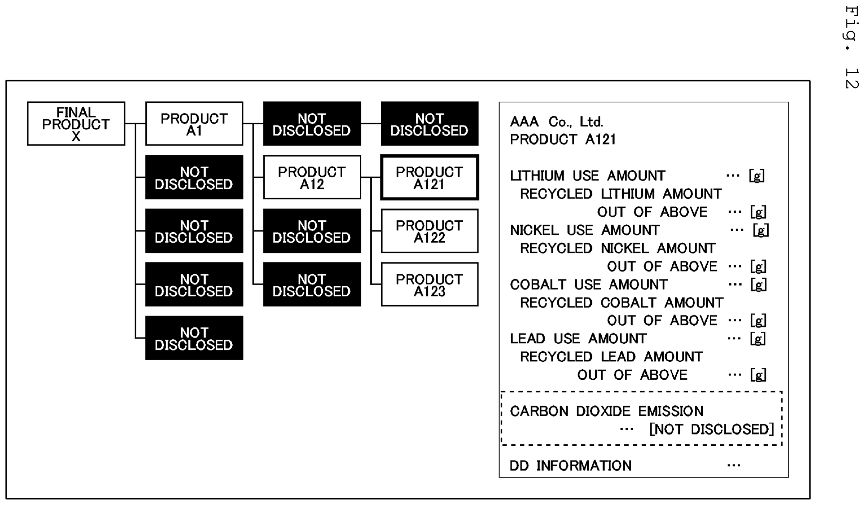

Fig. 12 is an example of a product tree in the case in which products without access authority are not disclosed. In the present example, the product tree is displayed in a state in which, for the products not disclosed, detailed information (or presence itself of the products) is concealed.

Note that, in a case in which presence of products is disclosed but access authority is not imparted to only a specific item in product information corresponding to the products, concealing processing is performed on only the specific item as indicated by a dotted line in the figure. In the illustrated example, it is indicated that emission of carbon dioxide at the time when the product A121 is produced is not disclosed.

On the other hand, even when a product (or an item) without access authority is present in the tree, the integration of the traceability-related information described above is executed without being affected by the presence of the product (or the item). For example, in the illustrated example, emission of carbon dioxide for the product A121 is not disclosed but this does not affect processing for calculating total emission of carbon dioxide for the product A12.

Note that the information provision unit 113 may carry out, after generating a product tree on which the concealing processing is not performed, the concealing processing for each of the companies based on access authority imparted to each of the companies or may generate a product tree using access authority of a relevant company. For example, when a product tree is requested from the company A, the information provision unit 113 may extract one or more pieces of product information for which access is permitted to the company A and generate a product tree.

[Processing flow]

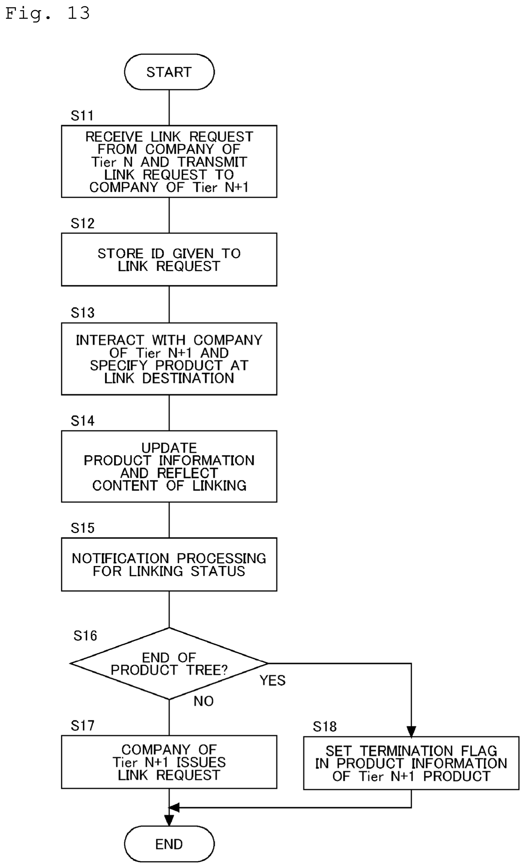

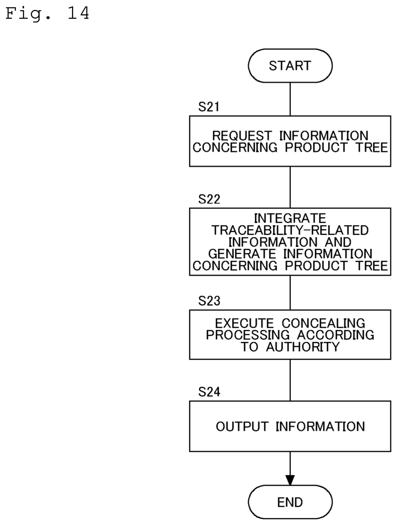

Subsequently, a flow of processing executed by the server apparatus 1 is described with reference to Fig. 13 and Fig. 14.

Fig. 13 is a flowchart of processing for the server apparatus 1 performing linking of pieces of product information based on an instruction from the company terminal 2.

In an example, interaction between the server apparatus 1 and the company terminal 2 is started when operators of companies included in the supply chain log in to the server apparatus 1 via the company terminals 2 using accounts of the companies corresponding to the company terminals 2. In the present example, it is assumed that the operators of the companies log in to the server apparatus 1 using accounts of the own companies.

Note that, it is assumed that, before starting the illustrated processing, the company terminals 2 have acquired product information of the own companies via the operators and transmitted the acquired product information to the server apparatus 1. The product information transmitted to the server apparatus 1 is received by the information collection unit 111 and stored in the storage unit 12.

In step S11, the server apparatus 1 (the linking unit 112) receives a link request from any company terminal 2. Note that, here, a company that transmits the link request in step S11 (a company belonging to the Tier N) is referred to as "downstream company" and a company that is a transmission destination of the link request (a company belonging to the Tier N+1) is referred to as "target company".

Steps S12 to S15 are steps for performing linking of pieces of product information in response to a link request. The steps are executed based on an instruction from the target company that has received the link request.

First, in step S12, the linking unit 112 stores a request ID included in the link request received in step S11. Note that, when the link request is generated in response to a link request transmitted from another company, the linking unit 112 store a relation between the link requests. This information may be shared with the companies that are transmission destinations of the link requests.

In step S13, the linking unit 112 performs interaction with the target company and specifies a product to be a link destination. In this step, the linking unit 112 transmits the received link request to an account of the target company and performs interaction with the target company to collect information concerning linking.

An operator of the company that has received the link request replies with, via the company terminal 2, for example, an own product having a supply relation with a designated product (a product designated by the downstream company). In this step, an operator of the target company may be caused to designate a combination of a downstream product and a product linked with the downstream product. The company terminal 2 of the target company transmits an identifier of a product that is a link source (the downstream product) and an identifier of the product that is the link destination to the server apparatus 1 as a pair. Accordingly, the server apparatus 1 can specify the downstream product and an upstream product linked with each other.

Note that, at this timing, a reply from the target company may be presented to the downstream company to cause an operator of the downstream company to check content of the linking. When there are a plurality of linking candidate products, choices may be presented to the operator of the downstream company to cause the operator to select a product. In this step, the target company may permit, to the downstream company, access authority to product information of the own company.

In step S14, the linking unit 112 of the server apparatus 1 updates the stored product information based on the link request and the reply to the link request and reflects link contents of the pieces of product information. The linking of the pieces of product information may be performed by storing, in link-related information included in the product information of the downstream product, information (an identifier, a pointer, or the like) concerning a product at a link destination.

Note that, when pieces of target product information have already been linked at timing when step S13 is executed, the processing in steps S13 to S14 may be skipped.

When the linking of the pieces of product information is completed, in step S15, the linking unit 112 executes processing for notifying a linking status (transmitting status information) to the downstream company. The linking unit 112 may generate the status information based on an instruction from the account of the target company or may receive, from the company terminal 2, status information generated by the account of the target company.

The status information may include, for example, "linking is completed in a target Tier (or product)". The status information may include an ID of a link request corresponding to the status information.

A transmission destination of the status information is typically the company that has transmitted the link request in step S11. The transmission destination of the status information may be specified based on the ID of the link request.

For example, in the example illustrated in Fig. 9, when linking is performed based on the link request "R001", the status information can be transmitted to the company A1. The status information may include the ID (R001) of the link request received from the downstream company and the ID (R011) of the link request transmitted to the upstream company in response to the link request.

Note that the transmission of the status information to the company that has transmitted the link request may not always be performed in this step.

As described above, when the target company is located in the middle of the supply chain, at timing when the target company performs linking of the own product, it cannot be notified to the downstream company that the linking has been completed to the end of the product tree.

In such a case, the target company may suspend notification to the downstream company until information from upstream is brought about (for example, status information is transmitted from the upstream company). In this case, the target company may transmit the status information to the downstream company with reception of the status information from any upstream company as a trigger.

A company to which the status information is transmitted can be specified by an ID of the link request. For example, in the example illustrated in Fig. 9, when linking is performed based on the link request "R011", the status information can be transmitted to a company corresponding to the link request "R001", that is, the company A1. Since the server apparatus 1 stores a relation among link requests, it is possible to specify a downstream company having a relation with a certain link request by tracing information concerning the relation.

With the configuration described above, all the companies can recognize that "linking has been completed to the end of the product tree".

In step S16, the linking unit 112 determines whether a product linked according to the link request is located at the end of the product tree.

For example, in the example illustrated in Fig. 9, it is assumed that a link request is transmitted from the company A1 and the product A1 and the product B1 are linked. Since the product B1 is located in the middle of the product tree, negative determination is made in this step.

On the other hand, a case in which a link request is transmitted from the company B1 and the product B1 and the product C1 are linked is conceived. Since the product C1 is located at the end of the product tree, positive determination is made in this step.

When the negative determination is made in step S16, the processing transitions to step S17. A company located in the immediately above Tier issues a link request.

For example, in the example illustrated in Fig. 9, it is assumed that a link request is transmitted from the company A belonging to the Tier 0 to the company B1 and the product A1 and the product B1 are linked. In this case, the company B1 belonging to the Tier 1 issues a link request anew. When the link request is issued from the company B1, the processing illustrated in Fig. 13 is repeated.

When the positive determination is made in step S16, the processing transitions to step S18 and a termination flag is set in product information of the product that is the link destination (a product located in the Tier N+1) specified in step S13.

For example, in the example illustrated in Fig. 9, it is assumed that a link request is transmitted from the company B1 belonging to the Tier 0 and the product B1 and the product C1 are linked. Since the product C1 is located at the end of the product tree, further linking does not occur. Thus, in order to clearly indicate this, the server apparatus 1 sets a termination flag in the product information of the product C1 based on an instruction from the company terminal 2 of the company C1. In this case, the status information may include notification to the effect that "the link request has reached a company in a most upstream Tier", "linking processing has been completed to the termination of the product tree", or "a termination flag has been set in product information of a product located at the termination of the product tree".

The processing in steps S13 to S17 is an example of "processing concerning linking work". That is, the processing concerning the linking work includes processing for performing linking of pieces of product information (steps S13 to S14) and processing for transmitting a further link request to an account of the upstream company (step S16).

Fig. 14 is a flowchart of processing for the server apparatus 1 to provide information concerning a product tree. The processing is started when the server apparatus 1 receives a request from the company terminal 2.

First, in step S21, the server apparatus 1 (the information provision unit 113) receives an information provision request concerning a product tree from the company terminal 2. The request includes, for example, an identifier of a target product. The target product may be a final product or may be a product (an intermediate product) other than the final product. When the target product is the final product, the information provision request may be received from an OEM company. When the target product is the intermediate product, the information provision request may be received from a company belonging to an intermediate Tier of the supply chain.

The server apparatus 1 (the information provision unit 113) that has received the request generates information concerning the product tree according to the processing described above (step S22). At this time, the information provision unit 113 executes processing for integrating, from most upstream to most downstream, traceability-related information defined in pieces of product information. A result of the integration is reflected on the pieces of product information.

Subsequently, in step S23, the server apparatus 1 executes, based on access authority owned by a target company, processing for concealing information to which access authority is not imparted. For example, when presence itself of product information of other companies is not disclosed to a certain company, the server apparatus 1 executes processing for concealing the presence of the product information. When only a specific item included in the product information is not disclosed, the server apparatus 1 executes processing for concealing content of the item. Information concerning a product tree subjected to the concealing processing is provided to the company terminal 2 and output (step S24).

Note that the processing in step S22 may be executed at timing when the product tree is completed. In this case, it may be notified to the companies with status information that the integration processing for the traceability-related information has been completed.

As described above, in the present embodiment, the server apparatus 1 receives a link request from any company belonging to the supply chain and executes linking of pieces of product information based on the link request. Since companies belonging to adjacent Tiers sequentially issue link requests in the upstream direction, it is possible to consecutively perform linking of pieces of product information from downstream to upstream.

Further, the server apparatus 1 stores a relation among a plurality of link requests that are consecutively issued. With such a configuration, it is possible to track to where in the upstream direction a link request has been propagated and to where linking of pieces of product information has been completed according to the propagation and notify any downstream company. Accordingly, the downstream company can learn timing when a product tree is decided and can appropriately acquire information concerning the product tree from the server apparatus 1.

(Second Embodiment)

In the first embodiment, a downstream company transmits a link request to an account of a company (an upstream company) belonging to a Tier adjacent in the upstream direction and an account of the upstream company performs linking of pieces of product information based on the link request. When the linking of the pieces of product information is completed, the account of the upstream company transmits status information for notifying a linking status to the company that has transmitted the link request. That is, in the first embodiment, as illustrated in Fig. 4, the status information is transmitted and received between companies belonging to adjacent Tiers.

On the other hand, with such a scheme, there is a problem in that it is difficult to check a linking status in an entire supply chain with a broad perspective. For example, in the example illustrated in Fig. 1, the OEM company, the company A, and the company B individually issue link requests and the companies receive status information corresponding to the companies respectively from upstream companies belong to adjacent Tiers. However, with this method, the OEM company located most downstream cannot grasp a linking status in the upstream direction. For example, even when there is a company that is not performing operation for linking pieces of product information and, for this reason, a product tree is in an incomplete status, the OEM company cannot recognize this. This is because the OEM company receives status information only from the company A. When the OEM company is in a position of overseeing the supply chain, it is preferable that the OEM company can grasp linking statuses in a plurality of companies located upstream (for example, a link request has been propagated to the end of the product tree or linking has been entirely completed in response to the link request).

In order to cope with the above, in a second embodiment, when linking of pieces of product information is performed in response to a link request, status information indicating a status of the linking is transmitted not to a company that has transmitted the link request but to a specific company. The specific company can be a company (a second downstream company) located further downstream than the company that has transmitted the link request. In the present embodiment, the specific company is an OEM company located most downstream of the product tree.

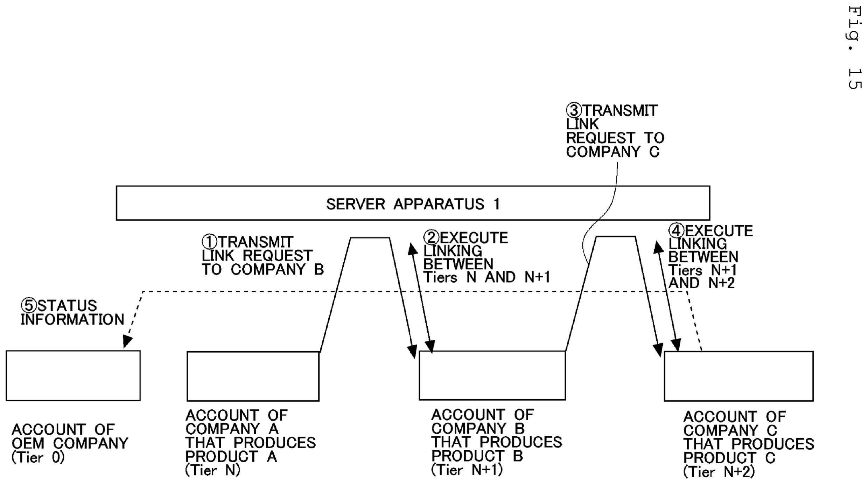

Fig. 15 is a diagram for explaining a transmission destination of status information in the second embodiment. In the present embodiment, as in the first embodiment, the account of the company A transmits a link request to the account of the company B and the account of the company B executes linking of pieces of product information in response to this. The account of the company B transmits a link request to the account of the company C and the account of the company C executes linking of pieces of product information in response to this.

In the first embodiment, at timing when the linking is completed, the company B and the company C transmit status information to downstream companies belonging to adjacent Tiers (that is, companies that have transmitted the link requests).

On the other hand, in the second embodiment, only a company located most upstream of a product tree issues status information. The status information is transmitted to a company located most downstream of the product tree (that is, the OEM company). The status information transmitted to the OEM company includes notification to the effect that "linking has been completed up to a product located most upstream of the product tree" and "a termination flag has been set for product information of the product located most upstream of the product tree". Accordingly, the OEM company can recognize that the link request has been propagated to a most upstream Tier and the linking of the pieces of product information has been completed in response to the link request.

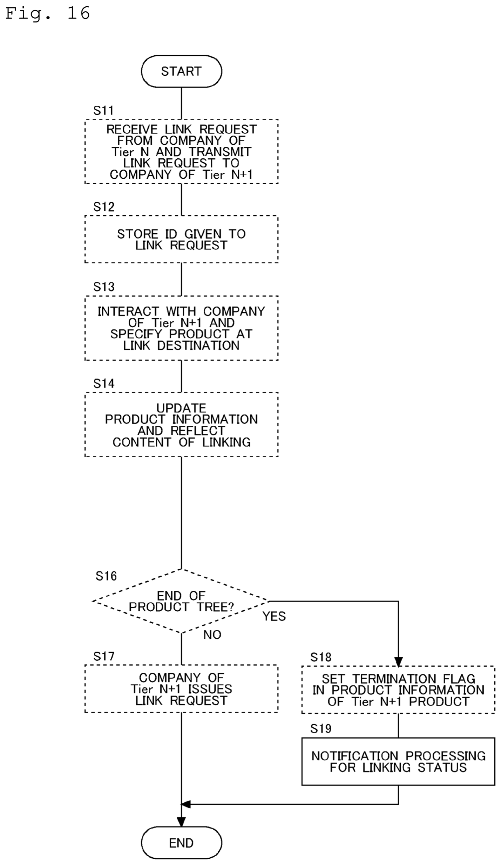

Fig. 16 is a flowchart of processing for the server apparatus 1 in the second embodiment to perform linking of pieces of product information based on an instruction from the company terminal 2.

In the second embodiment, the processing in step S15 in Fig. 13 is omitted. That is, in the present embodiment, processing for transmitting status information is not performed at timing when linking of pieces of product information is performed in Tiers. The status information is generated and transmitted when a company located at the end of the product tree sets a termination flag in product information corresponding to the company (step S19).

Accordingly, it is possible to notify the OEM company that the link request has been propagated to the end of the product tree and the linking of the pieces of product information has been completed in response to the link request.

Note that, in the present embodiment, an example in which the company located at the end of the product tree (the most upstream company) transmits the status information to the OEM company is cited. However, the company that transmits the status information may not always be the most upstream company. For example, one or more companies located in the intermediate Tier may generate status information indicating that "linking has been completed up to the Tier" and transmit the status information to the OEM company. Since the company located in the intermediate Tier transmits the status information to the OEM company, the OEM company can recognize "to which Tier in the product tree the linking has been completed". In this case, the server apparatus 1 may executes not the flowchart illustrated in Fig. 18 but the flowchart illustrated in Fig. 13. In this case, a transmission destination of the status information generated in step S15 is the OEM company. The status information may include an ID of a link request received from the downstream company, an ID of a link request transmitted to the upstream company, and a status of linking processing.

Further, the transmission destination of the status information may not always be the OEM company (the most downstream company in the product tree). The transmission destination of the status information can be any company located further downstream than the company that has transmitted the link request.

(Modifications)

The embodiments described above are only examples. The present disclosure can be changed as appropriate and carried out without departing from the gist of the present disclosure. For example, the processing and the means described in the present disclosure can be freely combined and carried out as long as a technical contradiction does not occur.

In the description of the embodiments, the server apparatus 1 stores the product information in the database. However, the product information may be stored by means other than the database.

In the description of the embodiments, the status information for notifying that the linking has been completed is transmitted at the timing when the linking is completed. However, the status information may be transmitted at a point in time when the linking is requested. Further, the status information may be transmitted with a change in a link relation among the pieces of product information in Tiers corresponding to the product information as a trigger.

In the description of the embodiments, the ID of the link request issued from the downstream company toward the target company is included in the status information. However, an ID of a link request issued by the target company in the upstream direction may be included in the status information in addition to this.

For example, in the example illustrated in Fig. 9, it is assumed that the company B1 performs linking in response to a link request issued by the company A1. It is assumed that the company B1 issues a new link request to the company C1.

In this case, in status information transmitted from the company B1 to the company A1, the ID (R001) of the link request issued by the company A1 may be included or both of the ID (R001) of the link request issued by the company A1 and the ID (R011) of the link request issued by the company B1 may be included.

With such a configuration, the company A1 can recognize an issuance status of a link request further in the upstream direction than the company B1.

Further, the server apparatus 1 may receive an inquiry about a linking status in any Tier with an ID of a link request as a key. For example, the server apparatus 1 may receive an inquiry "what is the current status of a link request having an ID R011" from the company A1. In response to the inquiry, the server apparatus 1 may provide information such as "linking has been completed up to a Tier immediately before the end of the product tree" or "linking has been completed up to the end of the product tree".

With such a configuration, the downstream company can grasp a generation status of a product tree by inquiring the server apparatus 1 using an ID of a link request notified by status information.

Further, the server apparatus 1 may manage a link request issued in the past and a transmission status of status information to a downstream company that transmitted the link request and periodically transmit the status information to the downstream company according to necessity.

In the description of the embodiments, according to transmission of a link request from a certain company, the companies relay the link request and complete a product tree from the downstream direction to the upstream direction. However, linking of pieces of product information may be individually carried out for each of Tiers without using the link request as a trigger.

In this case, any company may transmit an inquiry request for a linking status to an upstream company as first contact (second contact). In this case, the upstream company may reply with a linking status in a Tier to which the own company belongs or further upstream than the own company in response to the inquiry request. At this time, when the linking is incomplete, the upstream company may reply after executing linking processing.

In the description of the embodiments, as illustrated in Fig. 9, an example in which the Tiers are the three classes is described. However, a target supply chain may include four or more classes.

In this case, the company A1 may transmit a link request (first contact) to the company B1, the company B1 may transmit another link request (second contact) to the company C1, and the company C1 may transmit still another link request (third contact) to a further upstream company (for example, a company located in a Tier 4). The server apparatus 1 can relay these link requests among the companies and perform linking of pieces of product information based on instructions from the companies.

In the description of the embodiments, the accounts of the companies issue the link request (the first contact or the second contact). However, the server apparatus 1 may generate the link request based on instructions from the accounts of the companies. Such a form is also included in "the first contact is received from the account of the downstream company of the target company" and "the second contact is received from the account of the target company".

In the description of the embodiments, the accounts of the companies issue the status information. However, the server apparatus 1 may generate the status information based on instructions from the accounts of the companies. Such a form is also included in "the status of the linking work is received from the account of the target company".

In the description of the embodiments, the identifier of the downstream product to be the target of linking is included in the link request. However, the identifiers of both of the downstream product and the upstream product to be targets of linking may be included in the link request. When a product to be a link destination can be specified (by a product number or the like) on the downstream company side, the upstream product can also be designated from the downstream company side.

The server apparatus 1 may perform interaction with the upstream company beforehand, acquire information for designating upstream products to be permitted to be disclosed to the downstream company, and present, to the downstream company, a list of the upstream products permitted to be disclosed. The downstream company can also generate a combination of a downstream product and an upstream product corresponding to the downstream product with reference to the list.

In the description of the embodiments, as illustrated in Fig. 8, the link-related information is included in the product information. However, the link-related information, that is, information representing a link relation among products may be saved separately from the product information. For example, data not including specific information concerning the products and defining only the link relation may be saved separately from the product information. This data may be accessible from all the companies. That is, only the structure of a product tree may be disclosed and specific data included in the product tree may be acquired according to access authority imparted to the companies.

In the description of the embodiments, a form in which the server apparatus 1 completes the product tree is exemplified. However, the roles of the server apparatus 1 may be distributed and arranged in the plurality of company terminals 2. For example, the product information may be stored by a distributed database that uses a blockchain infrastructure. In this case, a product information database may be configured by the plurality of company terminals 2. In this case, the processing in the phases described above may be executed using a smart contract. For example, the linking processing may be executed with writing of a link request in the database by an account of a certain company as a trigger.

In the embodiments described above, the plurality of companies included in the supply chain are described as the companies that produce products. However, the companies included in the supply chain do not always need to be companies that produce products. For example, companies that perform transportation, import, storage, wholesale, and the like of products may be included in the companies constituting the supply chain. In an example, some companies among the plurality of companies may be companies that do not execute a manufacturing process, such as a trading company, a sales agent, and an import agent, and may receive a product from a company located in an immediately upper class (an upstream company) and deliver the product to a company located in an immediately lower class (a downstream company).

In the embodiments described above, the supply chain of the product relating to an automobile is assumed, the OEM manufacturer is described as the most downstream company and the companies that supply components, materials, assemblies, and the like are described as the suppliers. However, the companies belonging to the supply chain are not always limited to these companies. Companies in the classes may be determined as appropriate according to a product and the like. Manufacturing activities carried out in the companies until a final product is obtained may be determined as appropriate according to an embodiment and may include all activities that can be performed until the final product is obtained, such as digging, machining, assembling, transportation, and storage.

Processing described as being performed by one apparatus may be shared and executed by a plurality of apparatuses. Alternatively, processing described as being performed by different apparatuses may be executed by one apparatus. In a computer system, it is possible to flexibly change what kinds of hardware components (server components) implement functions.

The present disclosure can also be implemented by supplying a computer program implementing the functions described in the embodiments described above to a computer and one or more processors included in the computer reading and executing the program. Such a computer program may be provided to the computer by a non-transitory computer-readable storage medium connectable to a system bus of the computer or may be provided to the computer via a network. The non-transitory computer-readable storage medium includes, for example, a disk of any type such as a magnetic disk (a floppy (registered trademark) disk, a hard disk drive (HDD), or the like) or an optical disk (a CD-ROM, a DVD disk, a blue-ray disk, or the like), a read only memory (ROM), a random access memory (RAM), an EPROM, an EEPROM, a magnetic card, a flash memory, an optical card, and a medium of any type suitable for storing an electronic instruction.

[Description of the Reference Numerals and Symbols]

    1 Server apparatus
    2 Company terminal
    11, 21 Controller
    12, 22 Storage unit
    13, 23 Communication module
    14, 24 Input and output device

**Claims**

1.  A server apparatus comprising: a memory configured to store, in linkage, for each of a plurality of companies included in a supply chain, product information concerning products of the respective companies; and a controller,
    the controller executing:

        receiving, from an account of a downstream company of a target company, first contact concerning a linking work for product information of a target product, the first contact including first identification information, and transmitting the first contact to an account of the target company;
        executing processing concerning the linking work in response to receiving the first contact; and
        receiving a status of the linking work for the target product from the account of the target company and notifying, in correlation with the first identification information included in the received first contact, the status toward an account of a second downstream company located further downstream than the downstream company,
        the processing concerning the linking work including receiving, from the account of the target company, second contact concerning linking work for product information of an upstream product linked with the product information of the target product, the second contact including second identification information, and transmitting the second contact to an account of an upstream company of the target company,
        the notifying the status including notifying the second identification information to the account of the second downstream company in correlation with the first identification information.

2.  The server apparatus according to claim 1, wherein

        when the target product is located at a termination of a product tree,
        the processing concerning the linking work includes setting a termination flag in the product information of the target product, and
        the notifying the status includes notifying, to the account of the second downstream company, in correlation with the first identification information, information indicating that the termination flag has been set, and
        when the target product is not located at the termination of the product tree,
        the processing concerning the linking work includes transmitting the second contact including the second identification information to the account of the upstream company of the target company, and

the notifying the status includes notifying the second identification information to the account of the second downstream company in correlation with the first identification information.

3. The server apparatus according to claim 1 or 2, wherein, in response to receiving the first contact, after the linking work for the product information of the target product is completed, the controller transmits the second contact to the account of the upstream company.

4. The server apparatus according to claim 1 or 2, wherein the memory stores the first identification information and the second identification information correlated with the first identification information.

5. The server apparatus according to claim 1 or 2, wherein

   the first contact includes a request for linking a downstream product of the downstream company and the target product, and
   the second contact includes a request for linking the target product and an upstream product of the upstream company.

6. The server apparatus according to claim 5, wherein the first contact includes an inquiry request to a linking status in a product located further upstream than the target product.

7. The server apparatus according to claim 1 or 2, wherein the controller receives, from the account of the upstream company that has transmitted the second contact, for the product information of the upstream product, third contact concerning linking work for product information of a further upstream product, the third contact including third identification information, and transmits the third contact to an account of a company located further upstream than the upstream company.

8. The server apparatus according to claim 1 or 2, wherein the product information includes traceability-related information.

9. The server apparatus according to claim 8, wherein the traceability-related information includes at least one of information concerning emission of greenhouse effect gas, a recycling rate concerning a predetermined material, and a score concerning due diligence.

10. An information processing method executed by a server apparatus including: a memory configured to store, in linkage, for each of a plurality of companies included in a supply chain, product information concerning products of the respective companies; and a controller, the information processing method comprising:

   a step of receiving, from an account of a downstream company of a target company, first contact concerning a linking work for product information of a target product, the first contact including first identification information, and transmitting the first contact to an account of the target company;
   a step of executing processing concerning the linking work in response to receiving the first contact; and
   a step of receiving a status of the linking work for the target product from the account of the target company and notifying, in correlation with the first identification information included in the received first contact, the status toward an account of a second downstream company located further downstream than the downstream company,
   the processing concerning the linking work including a step of receiving, from the account of the target company, second contact concerning linking work for product information of an upstream product linked with the product information of the target product, the second contact including second identification information, and transmitting the second contact to an account of an upstream company of the target company,
   the notifying the status including a step of notifying the second identification information to the account of the second downstream company in correlation with the first identification information.

11. The information processing method according to claim 10, wherein

   when the target product is located at a termination of a product tree,
   the processing concerning the linking work includes setting a termination flag in the product information of the target product, and
   the notifying the status includes notifying, to the account of the second downstream company, in correlation with the first identification information, information indicating that the termination flag has been set, and when the target product is not located at the termination of the product tree,
the processing concerning the linking work includes transmitting the second contact including the second identification information to the account of the upstream company of the target company, and
the notifying the status includes notifying the second identification information to the account of the second downstream company in correlation with the first identification information.

12. The information processing method according to claim 10 or 11, wherein, in response to receiving the first contact, after the linking work for the product information of the target product is completed, the second contact is transmitted to the account of the upstream company.

13. The information processing method according to claim 10 or 11, further comprising a step of causing the memory to store the first identification information and the second identification information correlated with the first identification information.

14. The information processing method according to claim 10 or 11, wherein

the first contact includes a request for linking a downstream product of the downstream company and the target product, and
the second contact includes a request for linking the target product and an upstream product of the upstream company.

15. The information processing method according to claim 14, wherein the first contact includes an inquiry request to a linking status in a product located further upstream than the target product.

16. The information processing method according to claim 10 or 11, further comprising a step of receiving, from the account of the upstream company that has transmitted the second contact, for the product information of the upstream product, third contact concerning linking work for product information of a further upstream product, the third contact including third identification information, and transmitting the third contact to an account of a company located further upstream than the upstream company.

17. The information processing method according to claim 10 or 11, wherein the product information includes traceability-related information.

18. The information processing method according to claim 17, wherein the traceability-related information includes at least one of information concerning emission of greenhouse effect gas, a recycling rate concerning a predetermined material, and a score concerning due diligence.

19. A program for causing the server apparatus to execute the information processing method according to claim 10.

Fig. 1

EP 4 712 010 A1

SERVER APPARATUS 1

COMPANY TERMINAL 2

COMPANY TERMINAL 2

COMPANY TERMINAL 2

COMPANY TERMINAL 2

DELIVERY

DELIVERY

DELIVERY

OEM COMPANY (Tier0)

COMPANY A (Tier1)

COMPANY B (Tier2)

COMPANY C (Tier3)

DOWNSTREAM

UPSTREAM

EP 4 712 010 A1

Fig. 2

| Tier0 | Tier1 | Tier2 | Tier3 |
|---|---|---|---|

FINAL PRODUCT X

PRODUCT A1 — PRODUCT A11 — PRODUCT A111

PRODUCT B1

PRODUCT A12 — PRODUCT A121

PRODUCT C1

PRODUCT A13

PRODUCT A122

PRODUCT D1

...

PRODUCT A123

...

Fig. 3

EP 4 712 010 A1

Fig. 4

SERVER APPARATUS 1

③TRANSMIT LINK REQUEST TO COMPANY C

④EXECUTE LINKING BETWEEN Tiers N+1 AND N+2

⑤STATUS INFORMATION

ACCOUNT OF COMPANY C THAT PRODUCES PRODUCT C (Tier N+2)

②EXECUTE LINKING BETWEEN Tiers N AND N+1

ACCOUNT OF COMPANY B THAT PRODUCES PRODUCT B (Tier N+1)

⑥STATUS INFORMATION

①TRANSMIT LINK REQUEST TO COMPANY B

ACCOUNT OF COMPANY A THAT PRODUCES PRODUCT A (Tier N)

Fig. 5

SERVER APPARATUS 1

CONTROLLER 11
CPU
RAM
ROM

STORAGE UNIT 12
PROGRAM
PRODUCT INFORMATION
ACCOUNT INFORMATION

COMMUNICATION MODULE 13

INPUT AND OUTPUT DEVICE 14

Fig. 6

COMPANY TERMINAL 2

CONTROLLER 21

CPU

RAM

ROM

STORAGE UNIT 22

PROGRAM

COMMUNICATION MODULE 23

INPUT AND OUTPUT DEVICE 24

Fig. 7

SERVER APPARATUS 1

CONTROLLER 11

INFORMATION
COLLECTION UNIT
111

LINKING UNIT
112

INFORMATION
PROVISION UNIT
113

STORAGE UNIT 12

PRODUCT
INFORMATION

ACCOUNT
INFORMATION

Fig. 8

| COMPANY ID | | C001 |
|---|---|---|
| COMPANY NAME | | COMPANY A |
| PRODUCT ID | | P001 |
| PRODUCT NAME | | PRODUCT A |
| LINK-RELATED INFORMATION | UPSTREAM PRODUCT INFORMATION | (NOT LINKED) |
| | TERMINATION FLAG | (NOT SET) |
| TRACEABILITY -RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | PRODUCTION TIME CO2 EMISSION | X[g] |
| | PRODUCTION TIME POWER CONSUMPTION | X[kW] |
| | DD INFORMATION | ... |
| ... | | ... |

Fig. 9

Fig. 10

Fig. 11

AAA Co., Ltd.
PRODUCT A12

LITHIUM USE AMOUNT ... [g]
RECYCLED LITHIUM AMOUNT ... [g]
  OUT OF ABOVE ... [g]
NICKEL USE AMOUNT ... [g]
RECYCLED NICKEL AMOUNT ... [g]
  OUT OF ABOVE ... [g]
COBALT USE AMOUNT ... [g]
RECYCLED COBALT AMOUNT ... [g]
  OUT OF ABOVE ... [g]
LEAD USE AMOUNT ... [g]
RECYCLED LEAD AMOUNT ... [g]
  OUT OF ABOVE ... [g]
CARBON DIOXIDE EMISSION ... [g]
DD INFORMATION ...

PRODUCT A111
PRODUCT A121
PRODUCT A122
PRODUCT A123

PRODUCT A11
PRODUCT A12
PRODUCT A13
PRODUCT A14

PRODUCT A1
PRODUCT B1
PRODUCT C1
PRODUCT D1
PRODUCT E1

FINAL PRODUCT X

Fig. 12

AAA Co., Ltd.
PRODUCT A121

LITHIUM USE AMOUNT ... [g]
RECYCLED LITHIUM AMOUNT ... [g]
   OUT OF ABOVE ... [g]
NICKEL USE AMOUNT ... [g]
RECYCLED NICKEL AMOUNT ... [g]
   OUT OF ABOVE ... [g]
COBALT USE AMOUNT ... [g]
RECYCLED COBALT AMOUNT ... [g]
   OUT OF ABOVE ... [g]
LEAD USE AMOUNT ... [g]
RECYCLED LEAD AMOUNT ... [g]
   OUT OF ABOVE ... [g]

CARBON DIOXIDE EMISSION
   ... [NOT DISCLOSED]

DD INFORMATION ...

FINAL PRODUCT X

PRODUCT A1

NOT DISCLOSED
NOT DISCLOSED
NOT DISCLOSED
NOT DISCLOSED

NOT DISCLOSED
PRODUCT A12
NOT DISCLOSED
NOT DISCLOSED

NOT DISCLOSED
PRODUCT A121
PRODUCT A122
PRODUCT A123

Fig. 13

```
                    ┌──────────┐
                    │  START   │
                    └────┬─────┘
                         │
  S11                    │
 ┌───────────────────────────────────┐
 │      RECEIVE LINK REQUEST          │
 │       FROM COMPANY OF              │
 │   Tier N AND TRANSMIT              │
 │       LINK REQUEST TO              │
 │   COMPANY OF Tier N+1              │
 └───────────────┬───────────────────┘
                 │
  S12            │
 ┌───────────────────────────────────┐
 │     STORE ID GIVEN TO             │
 │       LINK REQUEST                │
 └───────────────┬───────────────────┘
                 │
  S13            │
 ┌───────────────────────────────────┐
 │   INTERACT WITH COMPANY           │
 │      OF Tier N+1 AND              │
 │    SPECIFY PRODUCT AT             │
 │     LINK DESTINATION              │
 └───────────────┬───────────────────┘
                 │
  S14            │
 ┌───────────────────────────────────┐
 │          UPDATE                   │
 │    PRODUCT INFORMATION            │
 │       AND REFLECT                 │
 │    CONTENT OF LINKING             │
 └───────────────┬───────────────────┘
                 │
  S15            │
 ┌───────────────────────────────────┐
 │   NOTIFICATION PROCESSING         │
 │     FOR LINKING STATUS            │
 └───────────────┬───────────────────┘
                 │
  S16            │
              ◇ END OF                  YES
              PRODUCT TREE? ───────────────┐
                 │                         │
                 │ NO                      │
  S17            │              S18        │
 ┌───────────────────────┐   ┌────────────────────────┐
 │   COMPANY OF          │   │ SET TERMINATION FLAG   │
 │  Tier N+1 ISSUES      │   │ IN PRODUCT INFORMATION │
 │   LINK REQUEST        │   │  OF Tier N+1 PRODUCT   │
 └───────────┬───────────┘   └───────────┬────────────┘
             │                           │
             └───────────┬───────────────┘
                         │
                    ┌────┴─────┐
                    │   END    │
                    └──────────┘
```

Fig. 14

START

S21

REQUEST INFORMATION
CONCERNING PRODUCT TREE

S22

INTEGRATE
TRACEABILITY-RELATED
INFORMATION AND
GENERATE INFORMATION
CONCERNING PRODUCT TREE

S23

EXECUTE CONCEALING
PROCESSING ACCORDING
TO AUTHORITY

S24

OUTPUT INFORMATION

END

Fig. 15

Fig. 16

## INTERNATIONAL SEARCH REPORT

| International application No. |
|---|
| **PCT/JP2023/026657** |

**A. CLASSIFICATION OF SUBJECT MATTER**

*G06Q 50/04*(2012.01)i
FI:   G06Q50/04

According to International Patent Classification (IPC) or to both national classification and IPC

**B. FIELDS SEARCHED**

Minimum documentation searched (classification system followed by classification symbols)

G06Q50/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-193525 A (HITACHI, LTD.) 02 August 2007 (2007-08-02)<br>entire text, all drawings | 1-19 |
| A | JP 2006-72404 A (HITACHI, LTD.) 16 March 2006 (2006-03-16)<br>entire text, all drawings | 1-19 |
| A | JP 2009-70257 A (HITACHI, LTD.) 02 April 2009 (2009-04-02)<br>entire text, all drawings | 1-19 |
| A | JP 2022-182766 A (TOYOTA JIDOSHA KABUSHIKI KAISHA) 08 December 2022 (2022-12-08)<br>entire text, all drawings | 1-19 |
| A | JP 2021-174419 A (HITACHI, LTD.) 01 November 2021 (2021-11-01)<br>entire text, all drawings | 1-19 |

☐ Further documents are listed in the continuation of Box C.     ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/026657**

| Patent document cited in search report | Publication date (day/month/year) | Patent family member(s) | Publication date (day/month/year) |
|---|---|---|---|
| JP 2007-193525 A | 02 August 2007 | (Family: none) | |
| JP 2006-72404 A | 16 March 2006 | US 2006/0047536 A1 entire text, all drawings EP 1630735 A1 CN 1744118 A | |
| JP 2009-70257 A | 02 April 2009 | (Family: none) | |
| JP 2022-182766 A | 08 December 2022 | US 2022/0383244 A1 entire text, all drawings EP 4095779 A1 CN 115409640 A KR 10-2022-0161189 A | |
| JP 2021-174419 A | 01 November 2021 | WO 2021/220642 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A